# EUROPÄISCHE PATENTSCHRIFT

(11) **EP 2 029 317 B1**
(45) Veröffentlichungstag und Bekanntmachung des Hinweises auf die Patenterteilung: **18.08.2010**
(21) Anmeldenummer: 07802147.4
(22) Anmeldetag: 05.09.2007
(51) Int. Cl.: B23P 15/00, F16C 9/04

(54) **VERFAHREN ZUR HERSTELLUNG EINES PLEUELS**
METHOD FOR PRODUCING A CONNECTING ROD
PROCÉDÉ DE FABRICATION D'UNE BIELLE

(30) Priorität: 15.09.2006 EP 06019412
(43) Veröffentlichungstag der Anmeldung: 04.03.2009
(73) Patentinhaber: ThyssenKrupp Metalúrgica Campo Limpo Ltda., 13231- 900 Campo Limpo Paulista SP (BR)
(72) Erfinder: GUERREIRO, Sergio, Stefano, 18046-162 Sorocaba-SP (BR)
(74) Vertreter: Adams, Steffen
(86) Internationale Anmeldenummer: PCT/EP2007/007740
(87) Internationale Veröffentlichungsnummer: WO 2008/031522

(56) Entgegenhaltungen:
- WO-A-00/37706
- DE-A1- 4 303 592
- DE-A1- 10 035 032
- DE-A1- 19 731 625
- DE-C1- 3 806 236

## Beschreibung

Die Erfindung betrifft ein Verfahren zum Herstellen eines Lagerbauteils, insbesondere Pleuels, aus einem Formteil, sowie eine Vorrichtung gemäß dem Oberbegriff des unabhängigen Anspruchs der jeweiligen Kategorie.

Solche Lagerbauteile sind beispielsweise als Pleuel mit einem kleinen Pleuelauge, einem Schaft und einem großen Pleuelauge bekannt, wobei das große Pleuelauge in der Regel einen geteilten Lagersitz für die Lagerung des Pleuels an einer Kurbelwelle umfasst. Solche Pleuel werden in großen Stückzahlen z.B. in Hubkolbenbrennkraftmaschinen für Personenkraftwagen und Lastkraftwagen, aber auch in Motoren für Schiffe oder in anderen Maschinen verbaut. Selbstverständlich können Pleuel auch in anderen Maschinen verwendet werden, in denen eine lineare Bewegung in eine Drehbewegung, oder umgekehrt, umgesetzt werden muss. Entsprechende Maschinen können z.B. Hubkolbenkompressoren, Pumpen, Webmaschinen und eine Vielzahl anderer Maschinen oder technischer Einrichtungen sein.

Auch wenn als bevorzugtes Anwendungsbeispiel im Folgenden häufiger auf ein Pleuel Bezug genommen wird, versteht es sich von selbst, dass sich die Erfindung auch auf andere Lagerbauteile bezieht, die als wesentliches Merkmal einen geteilten Lagersitz haben.

Ein Pleuel oder ähnliche Lagerbauteile werden im Allgemeinen dadurch hergestellt, dass zunächst ein Formteil durch Schmieden, Giessen oder ein pulvermetallurgisches Verfahren bereitgestellt wird, wobei ein Innenmaß des großen Pleuelauges im Bereich einer zukünftigen Trennstelle, an der das große Pleuelauge zur Bildung eines geteilten Lagesitzes in einem späteren Verfahrenschritt an einer Trennfläche getrennt wird, bevorzugt ein Aufmaß aufweist.

Die Trennung zur Bildung des geteilten Lagersitzes kann z.B. durch Sägen erfolgen, wodurch das Aufmaß wieder weitgehend beseitigt wird. Die Trennflächen der so gebildeten Pleuelkappe, bzw. Lagerdeckels einerseits und des restlichen Pleuels andererseits werden in einem weiteren Verfahrensschritt passgenau, z.B. durch Schleifen bearbeitet. Die Pleuelkappe wird in fertigem Zustand in der Regel mittels Pleuelschrauben an dem restlichen Pleuel befestigt, wobei die dazu erforderlichen Schraubenlöcher vor oder nach der Trennung gebohrt werden können. In zusammengesetztem Zustand des Pleuels erfolgt anschließend eine mechanische Bearbeitung des Lagersitzes zur Aufnahme, von Lagerschalen, die zwischen Pleuel und Kurbelwelle unter Bildung eines Gleitlagers angeordnet werden.

Die mechanische Bearbeitung des Lagersitzes umfasst meist eine Grob-, eine Fein- und eine Feinstbearbeitung durch Drehen, Feindrehen bzw. Honen. Außerdem müssen im Lagersitz des Pleuelauges Ausnehmungen vorgesehen werden, die mit entsprechenden Nasen der Lagerschalenhälften zusammenwirken, so dass ein Verdrehen der Lagerschalen im Betriebszustand verhindert wird.

Die beiden Lagerschalenhälften müssen dabei mit höchster Präzision bearbeitet werden, da zum einen die Innenflächen der Lagerschalenhälften zusammen mit der Kurbelwelle das Gleitlager mit einer dazu erforderlichen Gleitlagerpassung bilden, und andererseits die äußeren Oberflächen der Lagerschalen dem Lagersitz des großen Pleuelauges des Pleuels angepasst werden müssen. Um einen sicheren Sitz der Lagerschalenhälften zu gewährleisten, ist es erforderlich, dass die Lagerschalenhälften zwischen der Pleuelkappe, d.h. dem Lagerdeckel und dem restlichen Pleuel eingeklemmt werden. Dadurch kann nicht ausgeschlossen werden, dass beim Verschrauben der Pleuelkappe Verspannungen entstehen, die Verformungen verursachen können, die zu Passungenauigkeiten führen.

Jedoch auch bei hoch präziser Bearbeitung kann nicht immer verhindert werden, dass sich bei großen Belastungen im Betriebszustand die Pleuelkappe verschiebt und somit ein einwandfreier Sitz der Lagerschalenhälften nicht mehr gewährleistet ist.

All diese Probleme, die durch die Verwendung von Lagerschalen auftreten, abgesehen davon, dass die Konstruktion mit Lagerschalen aufwändig und wartungsintensiv ist, vor allem weil die Lagerschalen nur eine begrenzte Lebensdauer haben, sind bereits frühzeitig erkannt worden, und im Stand der Technik werden verschiedene Maßnahmen vorgeschlagen, um diese Probleme zumindest teilweise zu vermeiden.

So ist aus der DE 38 06 236 ein Pleuel bekannt, dessen Pleuelkappe durch Bruchtrennung vom restlichen Pleuel getrennt wird, das heißt, die Pleuelkappe, also der Lagerdeckel, wird nicht durch Sägen abgetrennt.

Durch die Bruchtrennung wird eine Trennfläche mit großer unregelmäßiger und rauer Oberfläche erzeugt, so dass ein seitlicher Versatz der Pleuelkappe vom restlichen Pleuel im Wesentlichen ausgeschlossen ist.

Ein weiterer positiver Effekt ist, dass die Trennfläche durch die Bruchtrennung eine einzigartige Bruchoberfläche erhält, so dass Verwechselungen von Einzelteilen bei Montage- oder Reparaturarbeiten am Pleuel ebenfalls ausgeschlossen sind.

Allerdings müssen auch diese Pleuel immer noch mit Lagerschalen ausgestattet werden, so dass zwar das Problem einer Verschiebung der Pleuelkappe gegen den Rest des Pleuels einigermaßen gut gelöst ist, jedoch bleiben alle oben im Detail beschriebenen Nachteile der Lagerschalen weiter bestehen.

Zur Lösung dieser Problematik schlägt die EP 0 635 104 vor, ganz auf die Lagerschalen im Lagersitz zu verzichten und stattdessen die Lagersitzfläche mit einer thermischen Spritzschicht, also mit einer Oberflächenschicht als Lagerschicht, zu versehen. Die Pleuelkappe wird dabei ebenfalls durch Bruchtrennung vom Rest des Pleuels getrennt, so dass auch hier ein sicherer Sitz der Pleuelkappe auf dem Rest des Pleuels gewährleistet ist.

Ein zentraler Punkt gemäß EP 0 635 104 ist dabei, dass die Lagerschicht ebenfalls durch Bruchtrennung geteilt wird, so dass auch die Lagerschichten der beiden Lagerteile, also die Lagerschicht auf dem Lagerdeckel und die Lagerschicht auf dem Lagerboden, der am Rest des Pleuels zur Bildung des Lagersitzes den Gegenpart zum Lagerdeckel, also zur Pleuelkappe bildet, einzigartig und unverwechselbar zusammenpassen.

Es hat sich allerdings gezeigt, dass durch die Bruchtrennung der Lagerschicht tatsächlich mehr Probleme entstehen, als durch diese Maßnahme gelöst werden. Bei der Bruchtrennung der Lagerschicht können in dieser, abhängig vom Material aus dem die Lagerschicht besteht, der Dicke der Schicht usw., unerwünschte Spannungen, z.B. durch plastische Verformungen entstehen, je nach Material oder der Stärke der induzierten Spannungen im Beschichtungswerkstoff können in gravierenden Fällen sogar Risse in der Lagerschicht entstehen, oder die Haftung der Lagerschicht auf der Lagersitzfläche verschlechtert sich, wobei die Lagerschicht sich, vor allem unmittelbar in der Nähe der Bruchstelle, sogar von der Lagersitzfläche ablösen kann. Darüber hinaus können Ausbrüche am inneren Rand der Lagerschicht im Bereich der Bruchstelle entstehen, so dass die Lauffläche, auf der z.B. eine Kurbelwelle gelagert ist und auf der eine Oberfläche der Kurbelwelle im Betriebszustand in gelagerter Weise läuft, Beschädigungen aufweist, die zur Verschlechterung der Lagerung, insbesondere der Schmierung führen kann, so dass im schlimmsten Fall ein Lagerschaden befürchtet werden muss, der weitere gravierende Schäden an dem entsprechenden Motor zur Folge haben kann.

Aus der DE 100 35 032 A1 ist ein Verfahren mit den Merkmalen des Oberbegriffs des unabhängigen Verfahrensanspruchs und eine Vorrichtung mit den Merkmalen des unabhängigen Vorrichtungsanspruchs bekannt. Bei diesem bekannten Verfahren wird der Lagerdeckel von dem Restpleuel durch Bruchtrennung getrennt. Um die Bruchtrennung durchführen zu können ist in dem großen Pleuelauge eine Anrisskerbe vorgesehen, die eine Sollbruchstelle für die Bruchtrennung definiert. Außerdem wird die Innenwand des großen Pleuelauges bei diesem bekannten Verfahren mit einer Oberflächenbeschichtung versehen, indem eine Lagerschicht mittels eines thermischen Spritzverfahrens aufgebracht wird. Um einen Bereich der Innenwand des großen Pleuelauges zu erzeugen, der keine Oberflächenbeschichtung aufweist, wird in der DE 100 35 032 A1 die technische Lehre angegeben, in die Anrisskerbe ist eine Trennflächenerhebung einzulassen, die dann als Maskierungsmittel wirkt. Die wurzelseitig in die die Anrisskerbe ausbildende Vertiefung eingelassene Trennflächenerhebung bildet somit eine Maske, die einen die Anrisskerbe unmittelbar umgebenden Bereich vor dem Beschichtungsmaterial abschirmt, so dass ein nicht beschichteter Bereich an der Anrisskerbe gebildet wird (vgl. Spalte 4, Abs. 0033). Nachteilig bei diesem bekannten Verfahren ist, dass in jedem Fall eine Anrisskerbe in dem Pleuelauge erforderlich ist, um die Trennflächenerhebung fest gegenüber dem Pleuelauge positionieren zu können. Ohne eine Anrisskerbe kann die aus DE 100 35 032 A1 bekannte Maskierung nicht eingesetzt werden. Außerdem ist nachteilig, dass die Entfernung des Maskierungsmittels, d.h. der Trennflächenerhebung, nach dem Beschichtungsvorgang aufwändig und daher kostenintensiv ist, denn die feste Verankerung der Trennflächenerhebung in der Anrisskerbe muss dazu beseitigt werden. Weiter ist diese bekannte Maskierung mittels einer mit dem Pleuelauge verbundenen Trennflächenerhebung nicht dazu geeignet, erfolgreich bei einem industriellen Herstellungsverfahren eingesetzt zu werden, bei dem hohe Stückzahlen von Lagerbauteilen möglichst effizient und kostengünstig dadurch hergestellt werden, dass viele Lagerbauteile in Form eines Stapel zusammengefasst und gleichzeitig beschichtet werden.

Die Aufgabe der Erfindung ist es daher, ein verbessertes Verfahren zum Herstellen eines Lagerbauteils, insbesondere eines Pleuels zur Verfügung zu stellen, dessen Lagersitzflächen mittels einer Oberflächenbeschichtung in Form einer Lagerschicht beschichtet wird, so dass auf die nachteiligen Lagerschalen verzichtet werden kann, wobei jedoch die aus dem Stand der Technik bekannten schädlichen Wirkungen auf die Lagerschicht, die z.B. durch die Bruchtrennung hervorgerufen werden, vermieden werden können.

Eine weitere Aufgabe der Erfindung ist es, eine Vorrichtung zur Verfügung zu stellen, mit der hohe Stückzahlen von Lagerbauteilen möglichst effizient und kostengünstig hergestellt werden können.

Die diese Aufgaben lösenden Gegenstände der Erfindung sind durch die Merkmale des unabhängigen Anspruchs der jeweiligen Kategorie gekennzeichnet.

Die jeweiligen abhängigen Ansprüche beziehen sich auf besonders vorteilhafte Ausführungsformen der Erfindung.

Die Erfindung betrifft somit ein Verfahren zum Herstellen eines Lagerbauteils, insbesondere eines Pleuels, aus einem Formteil, wobei das Lagerbauteil zumindest einen durch einen Lagerboden und einen Lagerdeckel gebildeten geteilten Lagersitz umfasst und im Lagersitz zur Lagerung einer Welle eine mit einer Lagerschicht aus einem Lagerschichtmaterial beschichtete Lagersitzfläche ausgebildet ist. Bei dem Verfahren der vorliegenden Erfindung wird der Lagerdeckel von dem Formteil entlang einer Trennfläche abgetrennt. Erfindungsgemäß wird zur Bildung eines beschichtungsfreien Bereichs ein Maskierungsmittel während eines Beschichtungsvorgangs zum Aufbringen der Lagerschicht derart senkrecht zu einer Trennungslinie an der Lagersitzfläche angeordnet, dass in der Lagerschicht eine Ausnehmung in einer vorgebbaren Breite erzeugt wird.

Wesentlich für die Erfindung ist es folglich, dass die Lagerschicht, die zum Beispiel eine mittels Plasmaspritzen auf die Lagersitzfläche aufgebrachte thermische Spritzschicht sein kann, nicht durch Bruchtrennung im Bereich der Trennfläche getrennt wird. Das wird dadurch erreicht, dass während der Beschichtung der Lagersitzfläche in einem Bereich senkrecht zur Trennungslinie ein Maskierungsmittel an der Lagersitzfläche derart angeordnet wird, dass in der Lagerschicht eine Ausnehmung, bevorzugt eine streifenförmigen Ausnehmung über die gesamte Breite des Lagerbauteils, also zum Beispiel über die gesamte Dicke des Pleuelauges beim Beschichtungsvorgang erzeugt wird, so dass in dem Bereich, in dem der Lagerdeckel vom Rest des Lagerbauteils an einer Trennfläche, z.B. durch Bruchtrennung oder eine andere Trennungsmethode getrennt wird, keine Oberflächenbeschichtung in Form der Lagerschicht vorliegt, so dass die Lagerschicht, die ansonsten den Rest der Lagersitzfläche bedeckt, durch die Trennung des Lagerdeckels vom Rest des Lagerbauteils, d.h. vom Lagerboden, in keiner Weise negativ beeinflusst wird.

Erfindungsgemäß wird somit eine nicht zusammenhängende Lagerschicht erzeugt, in dem im Bereich z.B. einer Sollbruchstelle eine Maskierung während der Beschichtungsphase aufgebracht wird, durch die lokal das Aufbringen der Beschichtung auf die Oberfläche des Pleuelauges verhindert wird.

Somit steht erstmals ein Verfahren zur Herstellung eines Lagerbauteils bereit, das die Fertigung, z.B. eines Pleuels, mit einer Lagerschicht auf der Lagersitzfläche gestattet, so dass einerseits auf Lagerschalen verzichtet werden kann, sich selbst bei großen Belastungen im Betriebszustand die Pleuelkappe nicht verschiebt und somit ein einwandfreier Sitz der Lagerhälften sicher gewährleistet ist, weil das Lagerbauteil selbst entlang einer Trennfläche, bevorzugt mittels Bruchtrennung, getrennt wird, und andererseits die schädlichen Wirkungen auf die Lagerschicht durch die Abtrennung des Lagerdeckels vom Lagerboden, also durch die Abtrennung des Lagerdeckels vom Rest des Lagerbauteils, vermieden werden.

In einem bevorzugten Ausführungsbeispiel eines erfindungsgemäßen Verfahrens wird das Maskierungsmittel in Form einer Maskierungsstange, insbesondere in Form einer Maskierungsstange mit einem runden, oder einem ovalen, oder einem mehreckigen Querschnitt, insbesondere mit einem rechteckigen oder quadratischen Querschnitt ausgebildet, wobei zur Beschichtung, insbesondere im industriellen Maßstab, mindestens zwei Lagerbauteile, bevorzugt zehn oder mehr Lagerbauteile in Form eines Stapels auf einer Halterung angeordnet werden und/oder das Maskierungsmittel in der Halterung verankert wird.

Das heißt, vor allem in der industriellen Fertigung, wo hohe Stückzahlen von Lagerbauteilen möglichst effizient und kostengünstig hergestellt werden müssen, werden zur Beschichtung gleich mehrere Lagerbauteile in Form eines Stapels auf einer Halterung angeordnet und können so z.B. gleichzeitig beschichtet werden, wobei die Halterung zum Beispiel zwei Maskierungsstangen umfasst, die derart an der Lagersitzfläche angeordnet werden, dass senkrecht zur Trennungslinie bei jedem Lagerbauteil zwei Ausnehmungen beim Beschichtungsvorgang entstehen, so dass bei einer anschließenden Bruchtrennung die Trennflächen nicht durch die Lagerschicht verlaufen und daher die Lagerschicht durch die Bruchtrennung auch nicht negativ beeinflusst wird.

In den Ansprüchen 12 bis 15 ist eine erfindungsgemäße Vorrichtung angegeben, mit der eine Vielzahl von in Form eines Stapels angeordneten Lagerbauteilen effizient und kostengünstig beschichtet werden kann.

Es versteht sich, dass in ganz speziellen Fällen als Maskierungsmittel auch ein festes oder ein flüssiges oder ein gelartiges Material senkrecht zur Trennlinie an der Lagersitzfläche vor Beginn des Beschichtungsvorgangs vorgesehen werden kann, so dass während des Beschichtungsvorgangs ein Anhaften der Lagerschicht auf der Lagersitzfläche im Bereich der zu bildenden Ausnehmung verhindert wird.

Nach dem Beschichten der Lagersitzfläche mit der Lagerschicht wird das Maskierungsmittel entfernt, und / oder die Lagerschicht wird bevorzugt an einem Rand der Ausnehmung nachbearbeitet, um eventuelle Bruchkanten, die durch das Entfernen des Maskierungsmittels in einem Randbereich der Ausnehmung an der Lagerschicht entstehen können, zu beseitigen, zu glätten bzw. zu begradigen.

Wie bereits erwähnt, erfolgt die Abtrennung des Lagerdeckels vom Formteil bevorzugt durch Bruchtrennung. Es soll jedoch ausdrücklich darauf hingewiesen werden, dass die Abtrennung in speziellen Fällen, z.B. wenn ein sicherer Sitz des Lagerdeckels auf dem Lagerboden aufgrund anderer technischer Maßnahmen oder Umstände gewährleistet ist, auch durch andere Methoden, z.B. durch Sägen erfolgen kann. Auch in solchen Fällen hat sich das erfindungsgemäße Verfahren als deutlich überlegen herausgestellt, weil auch beim Durchsägen der Lagerschicht diese erheblichen mechanischen Belastungen ausgesetzt wird, die ebenfalls zu den oben beschriebenen Beschädigungen der Lagerschicht führen können.

Das Formteil wird bevorzugt in der Ausnehmung zur Bildung der Trennfläche mit einer Anrisskerbe versehen. Die Anrisskerbe kann z.B. mittels eines thermochemischen Verfahrens, also z.B. mit einem Energiestrahl, wie einem Laserstrahl oder einem Elektronenstrahl, oder auch mittels eines mechanischen Verfahrens, z.B. mittels einem Fluidstrahl, bevorzugt mit einem Wasserstrahl oder einer mechanischen Kerbvorrichtung oder in speziellen Fällen sogar durch das Maskierungsmittel selbst, das z.B. zur Bildung der Anrisskerbe über ein Kerbmittel, z.B. über eine Schneide verfügen kann, in die Lagersitzfläche im Bereich der Trennungslinie eingebracht werden. Dadurch wird die zu bildende Trennfläche in Form einer Sollbruchstelle gekennzeichnet, so dass z.B. bei einer anschliessenden Bruchtrennung eine präzise und saubere Trennfläche erreicht wird.

Dabei ist es in ganz speziellen Fällen möglich, dass der Lagerdeckel vor der Beschichtung der Lagersitzfläche mit der Lagerschicht getrennt wird. D.h., vor der Beschichtung der Lagersitzfläche mit der Lagerschicht wird der Lagerdeckel vom Formteil abgetrennt, insbesondere durch Bruchtrennung abgetrennt, und anschließend wieder lösbar zusammengesetzt. Dann erst erfolgt die Beschichtung der Lagersitzfläche mit der Lagerschicht, wobei zur Bildung der Ausnehmung selbstverständlich auch in diesen Fällen das Maskierungsmittel während des Beschichtungsvorgangs wie oben beschrieben verwendet wird.

Bevorzugt wird die Lagerschicht durch ein thermisches Spritzverfahren, insbesondere mittels Flammspritzen, Hochgeschwindigkeitsflammspritzen, Plasmaspritzen, oder ein anderes, aus dem Stand der Technik wohlbekanntes thermisches Spritzverfahren, oder durch ein galvanisches Verfahren oder mittels eines anderen geeigneten Beschichtungsverfahrens aufgebracht.

Das Formteil selbst, aus dem das Lagerbauteil gebildet wird, wird in an sich bekannter Weise durch Giessen oder Schmieden oder pulvermetallurgische Verfahren, insbesondere durch Sintern oder Sinterschmieden hergestellt.

Die Lagerschicht selbst kann z.B. als Gleitschicht, insbesondere als Gleitschicht mit guten Trocken- und / oder Nassgleiteigenschaften als Gleitlagerschicht ausgebildet werden.

Durch die Erfindung wird ein Lagerbauteil, insbesondere Pleuel, zur Verfügung gestellt aus einem Formteil, wobei das Lagerbauteil zumindest einen durch einen Lagerboden und einen Lagerdeckel gebildeten, an einer Trennfläche geteilten Lagersitz umfasst, und im Lagersitz zur Lagerung einer Welle eine mit einer Lagerschicht aus einem Lagerschichtmaterial beschichtete Lagersitzfläche ausgebildet ist. Erfindungsgemäss ist in der Lagerschicht zur Bildung eines beschichtungsfreien Bereichs senkrecht zu einer Trennungslinie, eine Ausnehmung in einer vorgebbaren Breite vorgesehen, wie oben bereits ausführlich bei der Diskussion des erfindungsgemäßen Verfahrens ausführlich beschrieben.

In einem für die Praxis sehr wichtigen Ausführungsbeispiel ist das Lagerbauteil als Pleuel mit einem geteilten Pleuelkopf ausgebildet.

Bei der erfindungsgemäßen Vorrichtung ist eine Halterung vorgesehen, auf der mindestens zwei, bevorzugt zehn oder mehr Lagerbauteile in Form eines Stapels angeordnet sind. Die Lagerbauteile können auf diese Weise alle gleichzeitig in einem Arbeitsgang beschichtet werden. Da das Maskierungsmittel als von dem Lagerbauteil getrenntes, nicht mit diesem verbundenes Element (z.B. als Maskierungsstange) ausgebildet ist, kann das Maskierungsmittel auf einfache Weise kostengünstig nach der Beschichtung entfernt und die maskierte, nicht beschichtete Stelle freigelegt werden.

Im Folgenden wird die Erfindung an Hand der schematischen Zeichnung näher erläutert. Es zeigen:
- Fig. 1: ein nach dem erfindungsgemäßen Verfahren hergestelltes Pleuel;
- Fig. 2: eine perspektivische Darstellung der Ausnehmung im Pleuelauge des Pleuels gemäß Fig. 1;
- Fig. 3: einen Schnitt entlang der Schnittlinie I-I gemäß Fig. 2 vor der Bruch- trennung;
- Fig. 4: der Ausschnitt des Pleuels gemäß Fig. 3 im Betriebszustand;
- Fig. 5: einen Stapel von Lagerbauteilen während eines Beschichtungs- vorgangs durch thermisches Spritzen.
- Fig. 6: eine um 90° gedrehte Darstellung des Stapels der Fig. 5 mit Maskie- rungsstangen;
- Fig. 7: einen Schnitt entlang der Schnittlinie II-II gemäß Fig. 6.

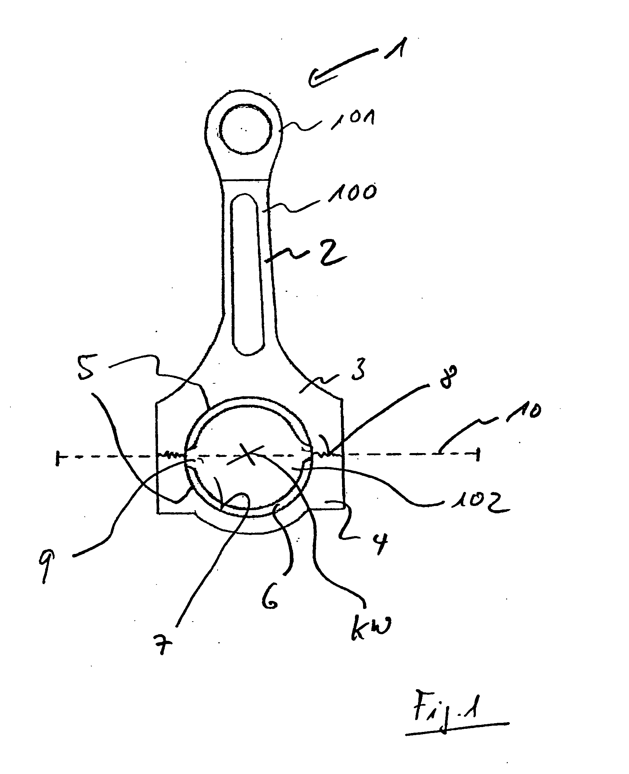

In Fig. 1 ist schematisch ein nach dem erfindungsgemäßen Verfahren hergestelltes Pleuel dargestellt, das im Folgenden gesamthaft mit dem Bezugszeichen 1 bezeichnet wird.

Das Pleuel der Fig. 1 wurde zum Beispiel in einem Sinter oder Schmiedeverfahren aus einem Formteil 2 hergestellt. Das Pleuel 1 umfasst einen Lagerboden 3, der über einen Pleuelschaft 100 in an sich bekannter Weise mit einem kleinen Pleuelauge 101 verbunden ist. Zusammen mit dem Lagerdeckel 4 bildet der Lagerboden 3 einen geteilten Lagersitz 5, wobei im Lagersitz 5 zur Lagerung einer Kurbelwelle KW eine mit einer Lagerschicht 6 aus einem Lagerschichtmaterial beschichtete Lagersitzfläche 7 ausgebildet ist.

Der geteilte Lagersitz 5 ist an einer Trennfläche 8 durch Bruchtrennung getrennt worden. Der Lagerdeckel 4 ist dabei im Einbauzustand an den Lagerboden 3, also an den Rest des Pleuels 1 z.B. mittels Pleuelschrauben verschraubt, die aus Gründen der Übersicht in Fig. 1 nicht dargestellt sind.

Deutlich zu erkennen ist die Ausnehmung 9, die sich senkrecht zur Trennungslinie 10 über die gesamte Dicke D des Pleuels 1, also in Richtung einer Achse der Kurbelwelle KW in Form eines beschichtungsfreien Streifens erstreckt. Erfindungsgemäß wurde die Ausnehmung 9 vor der Bruchtrennung des großen Pleuelauges 102, das durch den Lagerboden 3 und den Lagerdeckel 4 gebildet wird, bereits während der Beschichtung der Lagersitzfläche 7 mit der Lagerschicht 6 durch Verwendung des Markierungsmittels M erzeugt. Dazu wird das Markierungsmittel M während des Beschichtungsvorgangs zum Aufbringen der Lagerschicht 6 derart senkrecht zu der Trennungslinie 10 an der Lagersitzfläche 7 angeordnet, dass in der Lagerschicht 6 die beschichtungsfreie Ausnehmung 9 in Form eines Streifens der Breite B entsteht. Dadurch weist die Lagerschicht 6 durch den späteren Vorgang der Bruchtrennung keinerlei Schäden auf. Insbesondere weist die Lagerschicht 6 keinerlei, durch die Bruchtrennung verursachte innere Spannungen auf, haftet überall optimal auf der Lagersitzfläche 7, und auch die Oberfläche der Lagerschicht 6, die für den korrespondierenden Kurbelwellenabschnitt eine Lauffläche bildet, befindet sich ohne irgendwelche Schäden, wie sie aus dem Stand der Technik bekannt sind, in jeder Hinsicht in einwandfreiem Zustand. D.h., dadurch dass die Ausnehmung 9 vor der Bruchtrennung bereits während des Beschichtungsvorgangs erzeugt wurde, sind beim anschließenden Abtrennen des Lagerdeckels 4 vom Lagerboden 3 keinerlei schädliche Wirkungen, wie innere Spannungen, plastische oder nicht plastische Verformungen, Ausbrüche an den inneren Rändern der Lageschicht usw. verursacht worden.

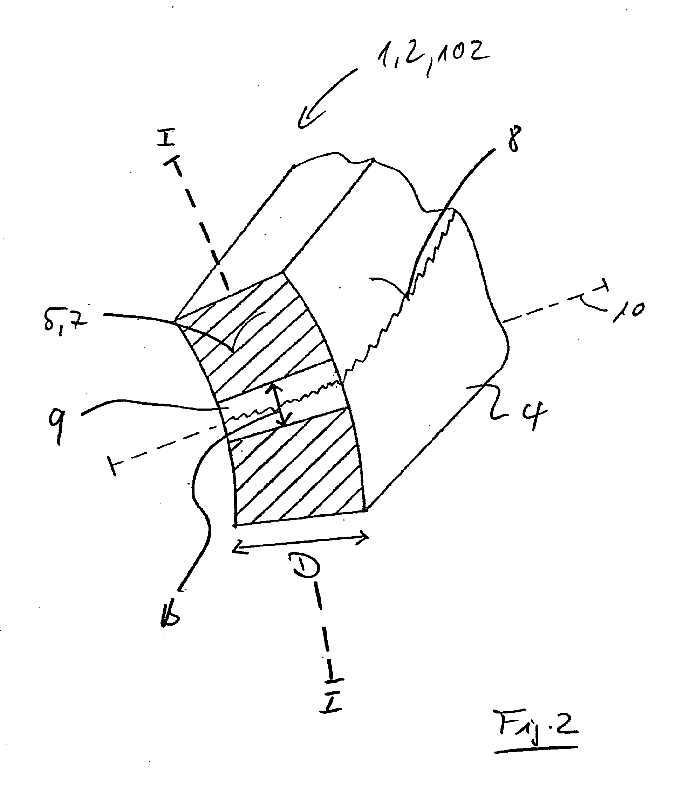

In Fig. 2 ist eine perspektivische Darstellung der Ausnehmung im großen Pleuelauge 102 des Pleuels 1 gemäss Fig. 1 zur Verdeutlichung nochmals ausschnittsweise im Detail gezeigt.

Der Lagerdeckel 4 wurde, nachdem die Ausnehmung 9 mit einer Breite B, die zum Beispiel zwischen 1 mm und 3 mm, im Speziellen 2 mm breit sein kann und sich senkrecht zur Trennungslinie 10 über die Dicke D des Pleuelauges 102 erstreckt, während des Beschichtungsvorgangs durch Verwendung des Markierungsmittels M erzeugt wurde, entlang der Trennfläche 8 abgetrennt und wieder zusammen gesetzt. Es ist gut zu erkennen, dass durch die Bruchtrennung eine Trennfläche 8 mit einzigartiger unregelmäßiger Struktur entstanden ist, so dass der Lagerdeckel 4 und der Lagerboden 3 in einzigartiger Weise zusammenpassen, wodurch einerseits ein sicher Sitz des Lagerdeckels 4 auf dem Rest des Pleuels 1 gewährleistet ist, und zum anderen die Teile beim Zusammenbau nicht verwechselt werden können.

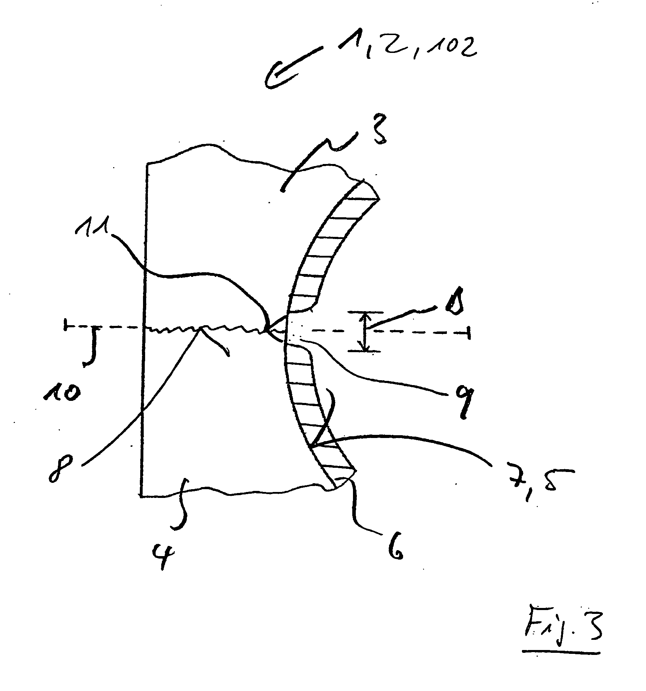

Fig. 3 zeigt einen Schnitt entlang der Schnittlinie I-I gemäß Fig. 2 vor der Bruchtrennung. Lagerdeckel 4 und Lagerboden 3 bilden somit noch eine Einheit, die vermutlich bei einer späteren Bruchtrennung zu erwartende Trennfläche 8 ist schematisch bereits vorskizziert. Die Lagersitzfläche 7 ist mit der Lageschicht 6 beschichtet, wobei durch Verwendung des Markierungsmittels M während der Beschichtung der Lagersitzfläche 7 mit der Lagerschicht 6 die Ausnehmung 9 der Breite B in der Lageschicht 6 in Form eines beschichtungsfreien Bereichs, senkrecht zur Trennungslinie 10 erzeugt wurde. In der Ausnehmung 9 ist eine Anrisskerbe 11 vorgesehen, die die spätere Bruchtrennung erleichtern soll, indem sie eine Sollbruchstelle zur Bildung der Trennfläche 8 definiert.

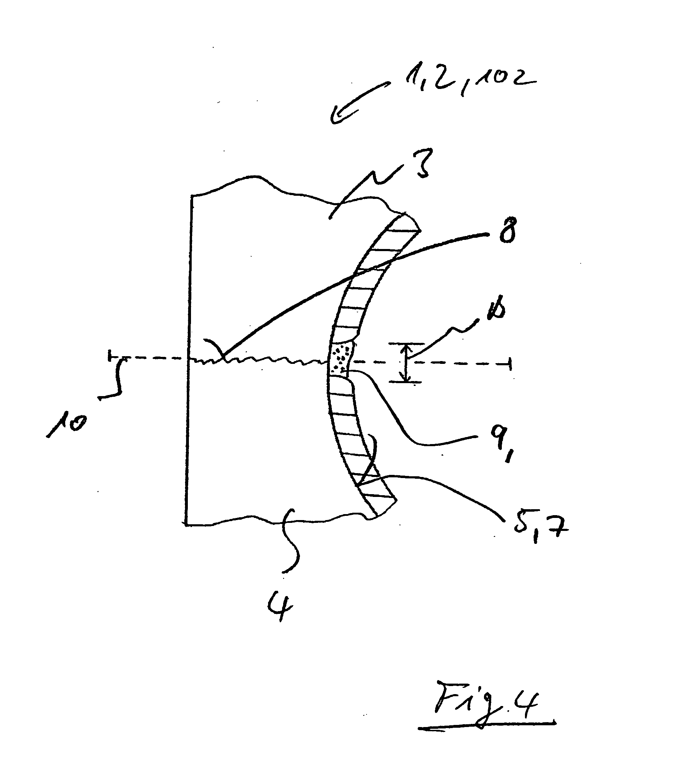

In Fig. 4 ist schließlich schematisch der Ausschnitt des Pleuels 1 gemäß Fig. 3 im Betriebszustand dargestellt. Der Pleuel 1 befindet sich im Einbauzustand und lagert eine in Fig. 4 aus Übersichtgründen nicht genauer dargestellte Kurbelwelle KW.

In der Ausnehmung 9 der Breite B hat sich ein Gemisch aus Schmieröl und Verschmutzungen angesammelt, das im Betrieb z.B. aus Öl und Abrieb, insbesondere aus Metallabrieb entstanden ist. Der Abrieb wird vom Schmieröl aufgenommen und in die Ausnehmungen 9 transportiert.

Anhand der Fig. 4 wird somit ein weiterer wichtiger Vorteil der Ausnehmung 9 in der Lageschicht 6 sehr deutlich. Die Ausnehmung 9 dient nämlich einerseits als Öltasche, in der eine bestimmte Menge an Schmieröl gespeichert werden kann, so dass die Schmierung zwischen Lagerschicht 6 und gelagerter Kurbelwelle KW verbessert wird. Andererseits, da das Schmieröl, das in der Ausnehmung 9 gespeichert ist, die im Betrieb entstandenen Verschmutzungen und Abriebteilchen aufnimmt, sind diese dem Ölfilm, der zwischen Lagerschicht 6 und Kurbelwelle KW als Schmierfilm dient, entzogen, so dass die Schmierwirkung des Ölfilms deutlich verbessert wird.

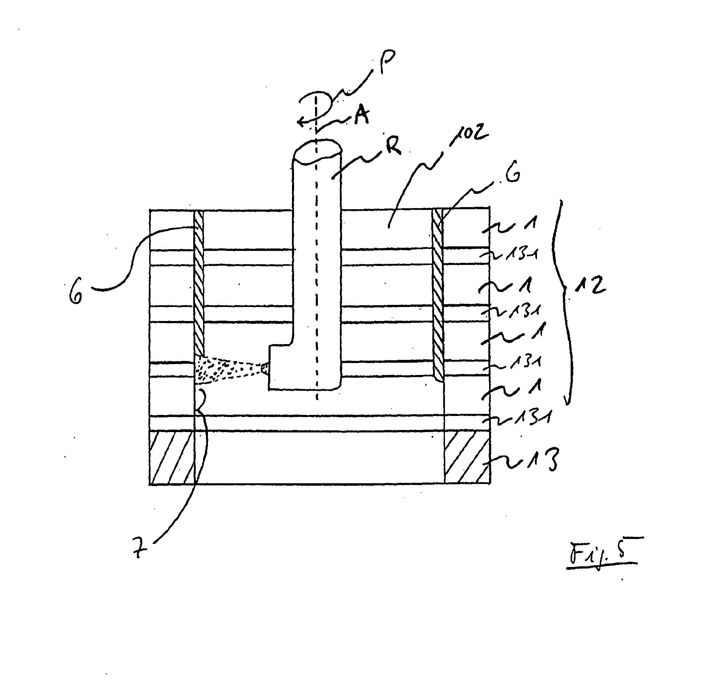

Anhand der Fig. 5 bis 7 soll schließlich schematisch ein bevorzugtes Verfahren bzw. eine Vorrichtung zur Beschichtung eines Lagerbauteils 1 gemäß einem erfindungsgemässen Verfahren demonstriert werden.

Im Beispiel der Fig. 5 sind insgesamt vier Lagerbauteile 1, z.B. vier Pleuel 1 derart auf einer Halterung 13 übereinander in Form eines Stapels 12 gestapelt, dass alle Lagersitzflächen 7 aller vier Lagerbauteile 1 gleichzeitig mittels der rotierenden Plasmaspritzvorrichtung R, die als solche aus dem Stand der Technik bekannt ist, beschichtet werden können.

Die Plasmaspritzvorrichtung R rotiert dabei während des Beschichtungsvorgangs um die Achse A, wie durch den Pfeil P angedeutet, und wird dabei darstellungsgemäß in senkrechter Richtung entlang der Achse A geführt, so dass nacheinander alle Lagersitzflächen 7 in allen großen Pleuelaugen 102 aller Lagerbauteile 1 mit einer Lagerschicht 6 durch thermisches Plasmaspritzen beschichtet werden können.

Dabei sind jeweils ein Maskierungsmittel M, das im vorliegenden Beispiel eine Maskierungsstangen M ist, an jeweils zwei gegenüber liegenden Zonen der Lagersitzflächen vorgesehen, in welchen Zonen zur Bildung von zwei gegenüber liegenden Ausnehmungen 9 je ein beschichtungsfreier Streifen entstehen soll. In der Schnittdarstellung der Fig. 5 sind die Maskierungsstangen M nicht zu sehen, da sie sich an zwei senkrecht zur Zeichenebene befindlichen Zonen der Lagersitzflächen 7 befinden.

Damit nach Beendigung des Beschichtungsvorgangs die Lagerteile 4 ohne Schaden wieder sauber getrennt werden können, ist zwischen jeweils zwei Lagerbauteilen 1 noch eine Zwischenscheibe 131, die z.B. eine Dicke von ca. 2 mm haben kann, vorgesehen.

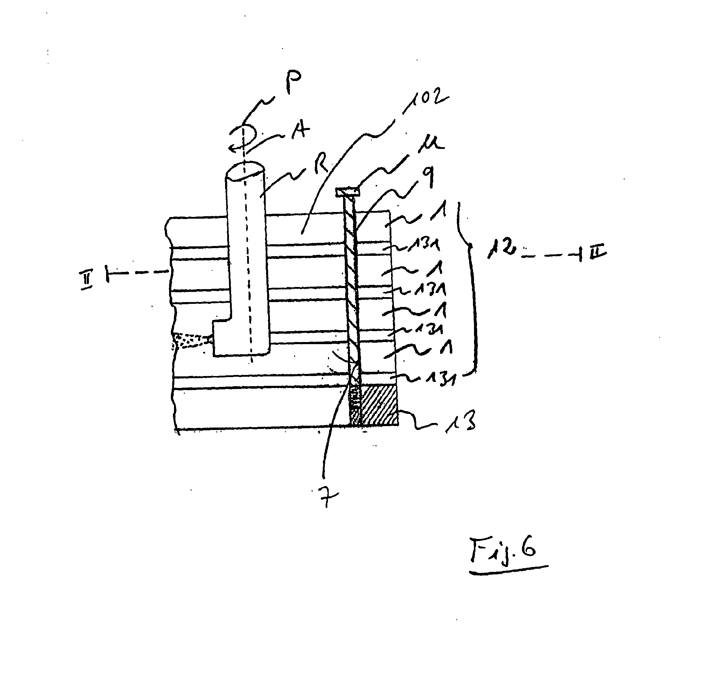

In Fig. 6 ist eine um die Achse A um 90° gedrehte Darstellung des Stapels 12 der Fig. 5 dargestellt, so dass hier auch die Maskierungsstangen M zu erkennen sind. Aus Gründen der Übersicht ist nur die darstellungsgemäß rechte Seite des Stapels 12 gezeigt. Wie bereits erwähnt, sind jeweils eine Maskierungsstange M an zwei gegenüber liegenden Zonen der Lagersitzflächen vorgesehen, in welchen Zonen zur Bildung von zwei gegenüber liegenden Ausnehmungen 9 je ein beschichtungsfreier Streifen entstehen soll.

Wie der Fig. 6 deutlich zu entnehmen ist, maskiert die Maskierungsstange M in allen vier großen Pleuelaugen 102 gleichzeitig jeweils einen Streifen der Breite B, so dass kein Beschichtungsmaterial, dass von der rotierenden Plasmaspritzvorrichtung R auf die Lagersitzfläche aufgespritzt wird, im Bereich dieses Streifens auf die Lagersitzfläche 7 gelangen kann, so dass automatisch die beschichtungsfreie Ausnehmung 9 gebildet wird.

Die Maskierungsstangen M sind dabei in der Halterung 13 mittels einer Schraubverbindung fest verankert, so dass sie überall im Stapel 12 derart an den Lagersitzflächen 7 anliegen, dass im Bereich der Maskierungsstangen M kein Beschichtungsmaterial auf die Lagersitzflächen 7 aufgebracht wird.

Der Fachmann versteht dabei, dass die Maskierungsstangen natürlich auch auf jede andere geeignete Weise zur Maskierung des zu bildenden beschichtungsfreien Bereichs auf der Lagersitzfläche fixiert sein können. Insbesondere um die Stabilität zu erhöhen, können die Maskierungsstangen M auch beispielsweise zusätzlich noch am oberen Ende des Stapels oder z.B. jeweils in einer Bohrung der Zwischenscheiben 131 oder durch andere dem Fachmann bekannte Maßnahmen gehaltert sein.

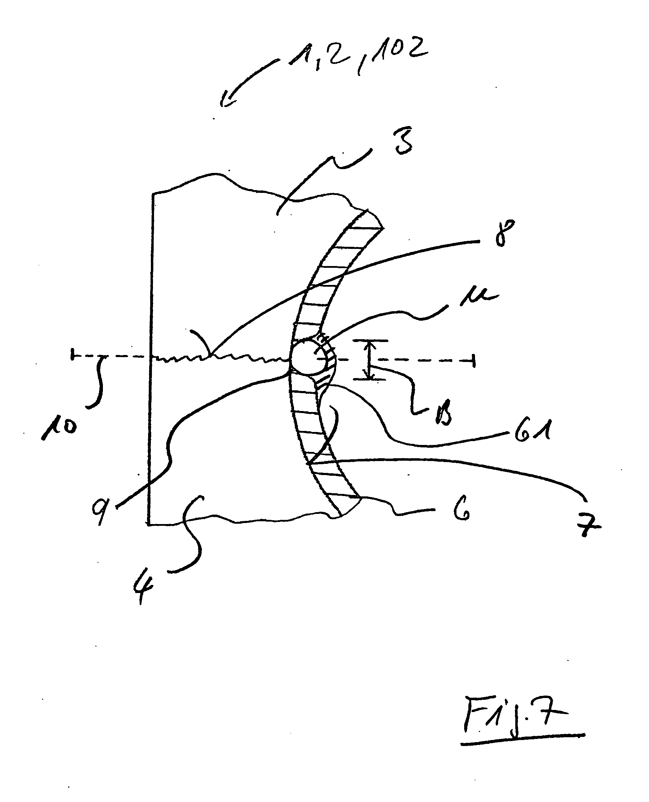

Fig. 7 zeigt schließlich einen Schnitt entlang der Schnittlinie II-II gemäß Fig. 6. Das große Pleuelauge, das sich gemäß Fig. 6 noch im Stapel 12 befindet, und zwar in einem Bereich, der bereits durch die rotierende Plasmaspritzvorrichtung R beschichtet wurde, ist selbstverständlich noch nicht durch Bruchtrennung getrennt worden. Es ist lediglich der zur erwartende Verlauf der Trennfläche 8 skizziert, die bei einer späteren Bruchtrennung des Lagerdeckels 4 vom Lagerboden 3 entstehen wird.

Deutlich zu erkennen ist, wie die Maskierungsstange M einen Bereich der Breite B während des vorgegangenen Beschichtungsvorgangs maskiert hat, so dass ein beschichtungsfreier Bereich auf der Lagersitzfläche 7 in Form der Ausnehmung 9 während des Beschichtungsvorgangs erzeugt werden konnte. Ebenso zu erkennen ist, dass während des Beschichtungsvorgangs selbstverständlich auch die Maskierungsstange M mit einer dünnen Schicht 61 aus Schichtmaterial belegt wurde. Diese dünne Schicht 61 wird mit der Entfernung der Maskierungsstange M nach Beendigung des Beschichtungsvorgangs automatisch mit entfernt, so dass nur die beschichtungsfreie Ausnehmung 9 verbleibt. Eventuell, falls notwendig, wird nach dem Entfernen der Maskierungsstange M die Lagerschicht 6 im Bereich der Kanten der Ausnehmung 9 noch nachbearbeitet, um z.B. geringe Beschädigungen an den Kanten, wie sie in seltenen Fällen beim Entfernen der Markierungsstangen M auftreten können, z.B. durch Polieren oder Glätten zu beseitigen.

Es versteht sich, dass die zuvor beschriebenen Ausführungsbeispiele der Erfindung, je nach Anwendung, auch in jeder geeigneten Weise kombinierbar sind und die im Rahmen dieser Anmeldung beschriebenen Ausführungsbeispiele lediglich exemplarisch zu verstehen sind. Der Fachmann versteht, dass insbesondere auch alle nahe liegenden Weiterbildungen der beschriebenen Ausführungsbeispiele von der vorliegenden Erfindung abgedeckt sind, soweit diese von den erteilten Patentansprüchen umfasst sind.

## Patentansprüche

1. Verfahren zum Herstellen eines Lagerbauteils (1), insbesondere eines Pleuels (1), aus einem Formteil (2), wobei das Lagerbauteil (1) zumindest einen durch einen Lagerboden (3) und einen Lagerdeckel (4) gebildeten geteilten Lagersitz (5) umfasst, im Lagersitz (5) zur Lagerung einer Welle eine mit einer Lagerschicht (6) aus einem Lagerschichtmaterial beschichtete Lagersitzfläche (7) ausgebildet ist, und bei welchem Verfahren der Lagerdeckel (4) von dem Formteil (2) entlang einer Trennfläche (8) abgetrennt wird, wobei zur Bildung eines beschichtungsfreien Bereichs ein Maskierungsmittel (M) während eines Beschichtungsvorgangs zum Aufbringen der Lagerschicht (6) derart senkrecht zu einer Trennungslinie (10) an der Lagersitzfläche (7) angeordnet wird, dass durch das Maskierungsmittel (M) während des Beschichtungsvorganges die Beschichtung der Lagersitzfläche (7) mit Lagerschichtmaterial in dem maskierten Bereich verhindert wird und nach der Entfernung des Maskierungsmittels (M) in der Lagerschicht (6) eine Ausnehmung (9) in einer vorgebbaren Breite (B) verbleibt, **dadurch gekennzeichnet, dass** das Maskierungsmittel (M) als von dem Lagerbauteil (1) getrenntes, nicht mit diesem verbundenes Element ausgebildet ist.

2. Verfahren nach Anspruch 1, wobei das Maskierungsmittel (M) in Form einer Maskierungsstange (M), insbesondere in Form einer Maskierungsstange (M) mit einem runden, oder einem ovalen, oder einem mehreckigen Querschnitt, insbesondere mit einem rechteckigen oder quadratischen Querschnitt ausgebildet wird.

3. Verfahren nach einem der Ansprüche 1 oder 2, wobei zur Beschichtung mindestens zwei Lagerbauteile (1), bevorzugt zehn oder mehr Lagerbauteile (1) in Form eines Stapels (12) auf einer Halterung (13) angeordnet werden und / oder das Maskierungsmittel (M) in der Halterung (13) verankert wird.

4. Verfahren nach einem der vorangehenden Ansprüche, wobei als Maskierungsmittel (M) ein festes oder flüssiges oder gelartiges Material senkrecht zur Trennlinie (10) an der Lagersitzfläche (7) vorgesehen wird, so dass während des Beschichtungsvorgangs ein Anhaften der Lagerschicht (6) auf der Lagersitzfläche (7) im Bereich der zu bildenden Ausnehmung (9) verhindert wird.

5. Verfahren nach einem der vorangehenden Ansprüche, wobei nach dem Beschichten der Lagersitzfläche (7) mit der Lagerschicht (6) das Maskierungsmittel (M) entfernt wird, und / oder die Lagerschicht (6) an einem Rand der Ausnehmung (9) nachbearbeitet wird.

6. Verfahren nach einem der vorangehenden Ansprüche, wobei die Abtrennung des Lagerdeckels (4) vom Formteil (2) durch Bruchtrennung erfolgt.

7. Verfahren nach einem der vorangehenden Ansprüche, wobei das Formteil (2) in der Ausnehmung (9) zur Bildung der Trennfläche (8) mit einer Anrisskerbe (11) versehen wird.

8. Verfahren nach einem der vorangehenden Ansprüche, wobei vor der Beschichtung der Lagersitzfläche (7) mit der Lagerschicht (6) der Lagerdeckel (4) vom Formteil (2) abgetrennt wird, insbesondere durch Bruchtrennung abgetrennt wird, und anschließend wieder lösbar zusammengesetzt wird.

9. Verfahren nach einem der vorangehenden Ansprüche, wobei die Lagerschicht (6) durch ein thermisches Spritzverfahren, insbesondere mittels Flammspritzen, Hochgeschwindigkeitsflammspritzen, Plasmaspritzen, oder durch ein galvanisches Verfahren oder mittels eines anderen Beschichtungsverfahrens aufgebracht wird.

10. Verfahren nach einem der vorangehenden Ansprüche, wobei das Formteil (2) durch Giessen oder Schmieden oder pulvermetallurgische Verfahren, insbesondere durch Sintern oder Sinterschmieden hergestellt wird.

11. Verfahren nach einem der vorangehenden Ansprüche, wobei die Lagerschicht (6) als Gleitlagerschicht ausgebildet wird.

12. Vorrichtung zum Herstellen eines Lagerbauteils (1), insbesondere eines Pleuels (1), aus einem Formteil (2), wobei das Lagerbauteil (1) zumindest einen durch einen Lagerboden (3) und einen Lagerdeckel (4) gebildeten geteilten Lagersitz (5) umfasst, wobei die Vorrichtung eine rotierende Beschichtungseinrichtung (R) aufweist, mit der eine Lagersitzfläche (7) des Lagersitzes (5) mit einer Lagerschicht (6) aus einem Lagerschichtmaterial beschichtet wird, wobei zur Bildung eines beschichtungsfreien Bereiches ein Maskierungsmittel (M) vorgesehen ist, das während des Beschichtungsvorgangs zum Aufbringen der Lagerschicht (6) derart senkrecht zu einer Trennungslinie (10) an der Lagersitzfläche (7) angeordnet ist, dass durch das Maskierungsmittel (M) während des Beschichtungsvorganges die Beschichtung der Lagersitzfläche (7) mit Lagerschichtmaterial in dem maskierten Bereich verhindert wird und nach der Entfernung des Maskierungsmittels (M) in der Lagerschicht (6) eine Ausnehmung (9) in einer vorgebbaren Breite (B) verbleibt, **dadurch gekennzeichnet, dass** eine Halterung (13) vorgesehen ist, auf der mindestens zwei, bevorzugt zehn oder mehr Lagerbauteile (1) in Form eines Stapels (12) angeordnet werden können, und dass das Maskierungsmittel (M) als von dem Lagerbauteil (1) getrenntes, nicht mit diesem verbundenes Element ausgebildet ist.

13. Vorrichtung nach Anspruch 12, wobei Mittel vorgesehen sind, durch die das Maskierungsmittel (M) zur Maskierung des zu bildenden beschichtungsfreien Bereiches auf der Lagersitzfläche (7) fixiert ist.

14. Vorrichtung nach Anspruch 13, wobei das Maskierungsmittel (M) in der Halterung (13) verankert ist.

15. Vorrichtung nach Anspruch 14, wobei das Maskierungsmittel (M) zusätzlich am oberen Ende des Stapels oder in einer Bohrung einer zwischen den Lagerbauteilen (1) angeordneten Zwischenscheibe (131) gehaltert ist.

## Claims

1. Method for producing a bearing component (1), in particular a connecting rod (1), from a moulded part (2), wherein the bearing component (1) includes at least one divided bearing seat (5) formed by a bearing base (3) and a bearing cover (4), a bearing seat surface (7) coated with a bearing layer (6) of a bearing layer material is formed in the bearing seat (5) for supporting a shaft, and in which method the bearing cover (4) is separated from the moulded part (2) along a separating surface (8), wherein a masking agent (M) is disposed perpendicularly with respect to a separating line (10) on the bearing seat surface (7) during a coating process for applying the bearing layer (6) in order to form a coating-free region, such that the masking agent (M) prevents the bearing seat surface (7) from being coated with bearing layer material in the masked region during the coating process and after removing the masking agent (M) a recess (9) at a predeterminable width (B) remains in the bearing layer (6), **characterised in that** the masking agent (M) is formed as an element which is separate from the bearing component (1) and is not connected thereto.

2. Method as claimed in Claim 1, wherein the masking agent (M) is formed in the form of a masking rod (M), in particular in the form of a masking rod (M) having a round, or an oval or a polygonal cross-section, in particular having a rectangular or square cross-section.

3. Method as claimed in any one of Claims 1 or 2, wherein for coating purposes, at least two bearing components (1), preferably ten or more bearing components (1), are disposed in the form of a stack (12) on a retainer (13) and/or the masking agent (M) is anchored in the retainer (13).

4. Method as claimed in any one of the preceding Claims, wherein a solid or liquid or gel-like material is provided as the masking agent (M) perpendicularly with respect to the separating line (10) on the bearing seat surface (7) so that during the coating process adhesion of the bearing layer (6) to the bearing seat surface (7) in the region of the recess (9) to be formed is prevented.

5. Method as claimed in any one of the preceding Claims, wherein after coating the bearing seat surface (7) with the bearing layer (6), the masking agent (M) is removed and/or the bearing layer (6) is further processed at one edge of the recess (9).

6. Method as claimed in any one of the preceding Claims, wherein the bearing cover (4) is separated from the moulded part (2) by means of break-separation.

7. Method as claimed in any one of the preceding Claims, wherein the moulded part (2) is provided with an incipient tear groove (11) in the recess (9) to form the separating surface (8).

8. Method as claimed in any one of the preceding Claims, wherein prior to coating the bearing seat surface (7) with the bearing layer (6), the bearing cover (4) is separated from the moulded part (2), in particular by means of break-separation, and is then releasably re-assembled.

9. Method as claimed in any one of the preceding Claims, wherein the bearing layer (6) is applied by means of a thermal spraying method, in particular by means of flame spraying, high-velocity flame spraying, plasma spraying or by means of a galvanic method or by means of another coating method.

10. Method as claimed in any one of the preceding Claims, wherein the moulded part (2) is produced by casting or forging or powder-metallurgical methods, in particular by sintering or sinter-forging.

11. Method as claimed in any one of the preceding Claims, wherein the bearing layer (6) is formed as a sliding bearing layer.

12. Device for producing a bearing component (1), in particular a connecting rod (1), from a moulded part (2), wherein the bearing component (1) includes at least one divided bearing seat (5) formed by a bearing base (3) and a bearing cover (4), wherein the device comprises a rotating coating device (R) by means of which a bearing seat surface (7) of the bearing seat (5) is coated with a bearing layer (6) of a bearing layer material, wherein a masking agent (M) is provided in order to form a coating-free region and is disposed perpendicularly with respect to a separating line (10) on the bearing seat surface (7) during the coating process for applying the bearing layer (6) such that the masking agent (M) prevents the bearing seat surface (7) from being coated with bearing layer material in the masked region during the coating process and after removing the masking agent (M) a recess (9) at a predeterminable width (B) remains in the bearing layer (6), **characterised in that** a retainer (13) is provided on which at least two, preferably ten or more, bearing components (1) can be disposed in the form of a stack (12), and **in that** the masking agent (M) is formed as an element which is separate from the bearing component (1) and is not connected thereto.

13. Device as claimed in Claim 12, wherein means are provided, by means of which the masking agent (M) for masking the coating-free region to be formed is fixed on the bearing seat surface (7).

14. Device as claimed in Claim 13, wherein the masking agent (M) is anchored in the retainer (13).

15. Device as claimed in Claim 14, wherein the masking agent (M) is additionally retained at the upper end of the stack or in a bore of an intermediate disc (131) disposed between the bearing components (1).

## Revendications

1. Procédé de fabrication d'un composant de palier (1), en particulier d'une bielle (1), à partir d'une pièce préformée (2), le composant de palier (1) comprenant au moins un siège de palier (5) divisé, composé d'un fond de palier (3) et d'un chapeau de palier (4), une surface de siège de palier (7), revêtue d'une couche de roulement (6), qui consiste en une matière de couche de roulement, étant formée dans le siège de palier (5) pour le montage d'un arbre, et le chapeau de palier (4) étant séparé de la pièce préformée (2), le long d'une surface de séparation (8), sachant que, pour la formation d'une région exempte de revêtement, au cours d'un processus de revêtement, pour l'application de la couche de roulement (6), on dispose un moyen de masquage (M) perpendiculairement à une ligne de séparation (10) sur la surface de siège de palier (7), de sorte que, pendant le processus de revêtement, le moyen de masquage (M) empêche que la surface de siège de palier (7) soit revêtue de matière de couche de roulement dans la région masquée, et qu'après l'enlèvement du moyen de masquage (M), un évidement (9) d'une largeur (B) qui peut être prédéterminée demeure, dans la couche de palier (6), **caractérisé en ce que** le moyen de masquage (M) est conçu en tant qu'élément séparé du composant de palier (1), non relié à celui-ci.

2. Procédé selon la revendication 1, le moyen de masquage (M) étant conçu sous la forme d'une barre de masquage (M), en particulier sous la forme d'une barre de masquage (M) qui présente une section transversale ronde ou ovale ou polygonale, en particulier une section transversale rectangulaire ou carrée.

3. Procédé selon l'une des revendications 1 ou 2, dans lequel, pour le revêtement, au moins deux composants de palier (1), de préférence dix composants de palier (1) ou plus, sont disposés en forme de pile (12) sur un support (13) et / ou le moyen de masquage (M) est ancré dans ledit support (13).

4. Procédé selon l'une des revendications précédentes, une matière solide ou liquide ou genre gel étant prévue, en tant que moyen de masquage (M), sur la surface de siège de palier (7), perpendiculairement à la ligne de séparation (10), afin d'empêcher, pendant le processus de revêtement, une adhésion de la couche de glissement (6) sur la surface de siège de palier (7), dans la région de l'évidement (9) devant être formé.

5. Procédé selon l'une des revendications précédentes, dans lequel, après le revêtement de la surface de siège de palier (7) avec la couche de glissement (6), le moyen de masquage (M) est enlevé et / ou la couche de palier (6) est retouchée sur un bord de l'évidement (9).

6. Procédé selon l'une des revendications précédentes, le chapeau de palier (4) étant séparé par rupture de la pièce préformée (2).

7. Procédé selon l'une des revendications précédentes, la pièce préformée (2) étant pourvue, dans l'évidement (9), d'une encoche d'amorce de rupture (11) pour la formation de la surface de séparation (8).

8. Procédé selon l'une des revendications précédentes, dans lequel, avant le revêtement de la surface de siège de palier (7) avec la couche de glissement (6), le chapeau de palier (4) est séparé de la pièce préformée (2), en particulier par rupture, et y est ensuite de nouveau rattaché de manière amovible.

9. Procédé selon l'une des revendications précédentes, la couche de glissement (6) étant appliquée selon un procédé de projection thermique, en particulier par projection au pistolet à flamme, projection au pistolet à flamme à haute vitesse, projection au plasma ou selon un procédé galvanique ou selon un autre procédé de revêtement.

10. Procédé selon l'une des revendications précédentes, la pièce préformée (2) étant fabriquée par coulée ou forgeage ou par un procédé de la métallurgie des poudres, en particulier par frittage ou frittage-forgeage.

11. Procédé selon l'une des revendications précédentes, la couche de glissement (6) étant conçue en tant que couche de palier lisse.

12. Dispositif pour la fabrication d'un composant de palier (1), en particulier d'une bielle (1), à partir d'une pièce préformée (2), le composant de palier (1) comprenant au moins un siège de palier (5) divisé, qui est composé d'un fond de palier (3) et d'un chapeau de palier (4), lequel dispositif présente un système de revêtement (R) rotatif, au moyen duquel une surface de siège de palier (7) du siège de palier (5) est revêtue d'une couche de glissement (6) en matière de couche de glissement, sachant que, pour la formation d'une région exempte de revêtement, est prévu un moyen de masquage (M), qui, pendant le processus de revêtement, pour l'application de la couche de glissement (6), est disposé perpendiculairement à une ligne de séparation (10), sur la surface de siège de palier (7), de sorte que le revêtement de la surface de siège de palier (7) avec de la matière de couche de glissement soit empêché par le moyen de masquage (M), pendant le processus de revêtement, et qu'un évidement (9) d'une largeur (B) qui peut être prédéterminée demeure dans la couche de glissement (6) après l'enlèvement du moyen de masquage (M), **caractérisé en ce qu'**est prévu un support (13), sur lequel peuvent être disposés, en forme de pile (12), au moins deux composants de palier (1), de préférence dix ou plus, et que le moyen de masquage (M) est réalisé en tant qu'élément séparé du composant de palier (1) et non relié à celui-ci.

13. Dispositif selon la revendication 12, dans lequel sont prévus des moyens, par lesquels le moyen de masquage (M) est fixé sur la surface de siège de palier (7) pour le masquage de la région exempte de revêtement devant être réalisée.

14. Dispositif selon la revendication 13, le moyen de masquage (M) étant ancré dans le support (13).

15. Dispositif selon la revendication 14, le moyen de masquage (M) étant supplémentairement maintenu à l'extrémité supérieure de la pile ou dans un alésage d'une plaque intercalaire (131), disposée entre les composants de palier (1).
